# EUROPÄISCHE PATENTSCHRIFT

(11) **EP 1 198 697 B1**
(45) Veröffentlichungstag und Bekanntmachung des Hinweises auf die Patenterteilung: **01.08.2007**
(21) Anmeldenummer: 01913579.7
(22) Anmeldetag: 05.02.2001
(51) Int. Cl.: G01C 21/26

(54) **VERFAHREN UND VORRICHTUNG ZUR VERWALTUNG VON VERKEHRSSTÖRUNGEN FÜR NAVIGATIONSGERÄTE**
METHOD AND DEVICE FOR MANAGING TRAFFIC DISTURBANCES FOR NAVIGATION DEVICES
PROCEDE ET DISPOSITIF DE GESTION DE PERTURBATIONS DE LA CIRCULATION POUR APPAREILS DE NAVIGATION

(30) Priorität: 04.02.2000 DE 10004969
(43) Veröffentlichungstag der Anmeldung: 24.04.2002
(73) Patentinhaber: ROBERT BOSCH GMBH, 70442 Stuttgart (DE)
(72) Erfinder: PETZOLD, Bernd, 31515 Wunstorf (DE); HAHLWEG, Cornelius, 31139 Hildesheim (DE); DRAEGER, Gerd, 38102 Braunschweig (DE)
(86) Internationale Anmeldenummer: PCT/DE2001/000457
(87) Internationale Veröffentlichungsnummer: WO 2001/057475

(56) Entgegenhaltungen:
- EP-A- 0 782 118
- EP-A- 0 921 509
- DE-A- 19 824 272
- US-A- 5 844 505
- PATENT ABSTRACTS OF JAPAN vol. 2000, no. 03, 30. März 2000 (2000-03-30) & JP 11 351895 A (HARNESS SYST TECH RES LTD;SUMITOMO WIRING SYST LTD; SUMITOMO ELECTRIC), 24. Dezember 1999 (1999-12-24)

## Beschreibung

### STAND DER TECHNIK

Die vorliegende Erfindung betrifft ein Verfahren und eine Vorrichtung zur Verwaltung von verkehrsrelevanten Ereignissen in einem fahrzeug-basierten Navigationssystem.

Obwohl auf beliebige Navigationssysteme anwendbar, werden die vorliegende Erfindung sowie die ihr zugrunde liegende Problematik in Bezug auf ein an Bord eines Automobils befindliches Navigationssystem erläutert.

Heutige Navigationssysteme bestehen im wesentlichen aus folgenden Subsystemen: eine digitale Straßenkarte, eine Einheit zur Systemverwaltung selbst, eine Einheit zur Positionsbestimmung, eine Fahrtroutenbestimmungseinheit, Schnittstellen zur Fahrzeugsensorik zur Erkennung von Fahrzeugbewegungen, eine Eingabeeinheit für die Bedienung des Systems sowie eine Ausgabeeinheit für die Zielführung, sowie eine Zielführungseinheit und - optional - ein Kommunikationssystem für die Anbindung an externe Verkehrsinformationszentralen.

Die digitale Straßenkarte wird üblicherweise auf Massenspeichermedien, in der Regel CD-ROMs, im Navigationssystem mitgeführt. Die digitale Straßenkarte kann Straßennetze mit unterschiedlicher Bedeckung (z. B. nur Deutschland) oder auch unterschiedlicher Detaillierung (z. B. Fernstraßennetz und Stadtstraßennetz bestimmter Regionen) enthalten.

Wird das Navigationssystem aktiviert, kann der Fahrer per Tastatur und Menüauswahl sein gewünschtes Ziel eingeben. Nachdem die Position des Fahrzeugs gemessen und dem System bekanntgemacht worden ist, startet die_ Fahrtroutenbestimmungseinheit einen Algorithmus, der eine optimale Route zum Ziel berechnet. Grundsätzlich wird nun der Fahrer entlang dieser Route zu seinem Ziel geführt.

Dabei läßt sich die Optimierung der Route bei bestimmten Navigationssystemen noch nach bestimmten Parametern wie etwa Wegoptimierung oder Zeitoptimierung einstellen.

Wenn der Fahrer unterwegs die zuvor berechnete Route aus irgendeinem Grunde verläßt, wie etwa aus mangelnder Aufmerksamkeit, oder etwa, weil er einen Abbiegehinweis nicht beachtet hat, oder wegen anderer Ereignisse, wie etwa beim Auftreten einer Baustelle, eines Staus, eines beliebigen anderen Verkehrshindernisses oder einer sonstigen Verkehrsstörung, wird eine neue Route berechnet, und die Fahranweisungen werden neu generiert.

Navigationssysteme bieten ebenso die Möglichkeit, über einen Verkehrsfunksender gemeldete Verkehrsstörungen in die Routenplanung dynamisch einzubeziehen und zu reagieren. Dies resultiert beispielsweise in einer aktualisierten Routenplanung, bei der ein gemeldeter Stau umfahren werden soll.

Entscheidungen des Fahrers, von der vom System vorgeschlagenen Route abzuweichen, die auf seinen Erfahrungen, seiner Intuition oder dem spontanen Erkennen einer bestimmten Verkehrssituation beruhen, fließen jedoch nicht in die Routenplanung des Navigationssystems ein.

Solche Ereignisse können bislang weder in das System eingegeben noch in irgendeiner Weise auf ihre Relevanz als Verkehrsstörung bewertet werden. Dies wäre jedoch besonders für solche Bereiche der Verkehrsnetze für die nur ungenügende Verkehrsinformationen bereitgestellt werden, wie etwa Kreisstraßen oder Bundesstraßen, von großem Nutzen.

Die EP 0 782 118 A1 zeigt ein Navigationssystem für Fahrzeuge, bei dem die aktuelle Position des Fahrzeugs ermittelt wird und mit einer Kamera Objekte vor dem Fahrzeug erfasst werden. Die erfassten Objekte werden mit einer Datenbasis der Routenberechnung verglichen, wobei bei festgestellten Unterschieden eine Korrektur der Datenbasis für eine erneute Routenberechnung erfolgt.

### Vorteile der Erfindung

Das erfindungsgemäße Verfahren mit den Merkmalen des Anspruchs 1 und die entsprechende Vorrichtung gemäß Anspruch 9 weisen gegenüber den bekannten Lösungsansätzen den Vorteil auf, dass insbesondere für die zuletzt genannten Nebenstrecken, für die keine oder nur ungenügende Verkehrsstörungen gemeldet werden, eine aktualisierte Routenplanung erstellt werden kann, die auf Verkehrsinformationen aus der Beobachtung des Fahrers heraus generiert oder automatisch generiert wird.

Die der Erfindung zugrundeliegende Idee besteht konzeptionell darin, im Navigationssystem eine Datenbank für Verkehrsinformationen, im folgenden als VI-Datenbank bezeichnet, zu verwalten, die durch den Fahrer insbesondere durch vom System initiierte, priorisierte Abfragen zur Verkehrssituation aktualisiert werden kann. Auf diese Weise können Beobachtungen, die der Fahrer während seiner Tour macht, als Verkehrsinformationen-in der Datenbank gespeichert werden und für eine aktualisierte Routenplanung dienen. Diese Beobachtungen stehen im Einklang mit der persönlichen Einschätzung des Fahrers beziehungsweise mit dessen individuellen Fahrverhalten.

Eine solchermaßen verbesserte Routenplanung kann dem Fahrer gleich unterwegs oder beim nächsten Befahren der selben Route beziehungsweise der Rückfahrt zur Verfügung gestellt werden. Diese Verkehrsinformationen werden im System gespeichert und für weitere Routenplanungen berücksichtigt. Die Verkehrsinformationen, die zu einer Aktualisierung der Routenplanung führen können, werden vorzugsweise durch eine priorisierte Abfrage dem System bekanntgemacht. Insbesondere wenn das System sprachgesteuert ist, wird der Fahrer daher relativ wenig abgelenkt. Eine solche priorisierte Abfrage zielt erfindungsgemäß immer nach dem Grund dafür, warum der Fahrer die vorgeschlagene Route verläßt. Dieser Mechanismus kann vorteilhaft in den verschiedensten Situationen eingesetzt werden. Wird beispielsweise eine Baustelle als Verkehrsstörung über einen Verkehrsfunksender an das Navigationssystem geliefert, so wird die Zielführung normalerweise um diese Baustelle herum leiten. Entscheidet sich der Fahrer aber trotzdem für den Weg durch die Baustelle, wird erfindungsgemäß eine Bewertung der Verkehrsstörung vom Fahrer an das Navigationsgerät gegeben, beispielsweise in der Form `Baustelle schnell durchfahrbar', oder `Baustelle aus Datenbank löschen', etc.

In den Unteransprüchen finden sich vorteilhafte Weiterbildungen und Verbesserungen des jeweiligen Gegenstandes der Erfindung.

Gemäß einer bevorzugten Weiterbildung weist das Navigationssystem eine Einrichtung zum Analysieren der Ereignisse auf, die eine Bewertung der Ereignisse bezüglich ihrer Relevanz als Verkehrsstörung zuläßt. Auf diese Weise ist es möglich, verschiedenen Ereignissen eine unterschiedliche Relevanz zuzuordnen.

Gemäß einer weiteren bevorzugten Weiterbildung können die Ereignisse aus dem Ereignishorizont des Fahrzeugs aus Messungen während der Fahrt automatisch gewonnen werden und mit dem zugehörigen Streckenabschnitt als dessen Attribut gespeichert werden. Dabei können die Meßwerte selbst - etwa bei Messung der Geschwindigkeit des Fahrzeugs - oder aus den Messungen abgeleitete Werte als Auswertungen in die Verkehrsinformationen einfließen. Insbesondere der zeitliche Geschwindigkeitsverlauf, also die Gleichmäßigkeit der Fahrgeschwindigkeit, oder die Umgebungstemperatur oder mechanische Erschütterungen des Fahrzeugs, wie sie etwa bei Befahren einer Straße mit vielen Schlaglöchern auftreten können, können so verarbeitet werden und entsprechend in die Bewertung mit einfließen.

Des weiteren können Attribute wie die Tageszeit und/oder der Wochentag zusätzlich mit dem jeweiligen Streckenabschnitt gespeichert werden. Dies kann hilfreich sein, um regelmäßig, insbesondere periodisch auftretende Ereignisse, wie etwa Staus, die vor allem Freitag Nachmittag oder Montag früh auftreten, zu erkennen. Dadurch kann das Navigationssystem mit empirischem Wissen versorgt werden, um den Fahrer beispielsweise dann nicht zu warnen, wenn er statt dessen an einem Dienstag Nachmittag unterwegs ist. Dies setzt natürlich die Nutzungsmöglichkeit einer Datumsfunktion sowie einer Uhr im Navigationssystem voraus.

Gemäß einer weiteren bevorzugten Weiterbildung kann der Fahrer einen oder mehrere Streckenabschnitte einer Route von sich aus mit bestimmten Attributen belegen. Dies kann grundsätzlich vor Fahrtantritt oder auch während der Fahrt geschehen. Solche Attribute können beispielsweise sein: 'Strecke oft vereist', 'Streckenabschnitt hat keine Tankstelle', `Streckenabschnitt bietet Einkaufsmöglichkeit oder Rastmöglichkeit'. Der Kreis dieser Attribute läßt sich fast beliebig erweitern und an die individuellen Bedürfnisse des Benutzers des Navigationssystems anpassen. Damit ist es möglich, das Navigationssystem mit personlichem, empirisch gewonnenem Wissen anzureichern.

Des weiteren können in bevorzugter Weise die aus einer Analyse der Ereignisse gewonnenen Informationen an eine externe Verkehrsinformationszentrale weitergegeben werden. Dies bringt den Vorteil mit sich, daß bestimmte Verkehrsinformationen, die für die Allgemeinheit relevant sein können, schnell zur Verbreitung durch einen Verkehrsfunksender gelangen.

### ZEICHNUNGEN

Ausführungsbeispiele der Erfindung sind in den Zeichnungen dargestellt und in der nachfolgenden Beschreibung näher erläutert.

Es zeigen:
- Fig. 1: ein Gesamtsystem zur Verwaltung von verkehrsrelevanten Ereignissen gemäß einer Ausführungsform der Erfindung;
- Fig. 2: die Einrichtung zur Verwaltung von Verkehrsereignissen aus Fig. 1 mit genaueren Einzelheiten;
- Fig. 3: eine mögliche Variation des Gesamtsystems;
- Fig. 4: den Ablauf beim Ermitteln der optimalen Route vor Fahrtantritt; und
- Fig. 5: den Ablauf beim Verwalten der VI-Datenbank während der Fahrt.

### BESCHREIBUNG DER AUSFÜHRUNGSBEISPIELE

In den Figuren bezeichnen gleiche Bezugszeichen gleiche oder funktionsgleiche Komponenten.

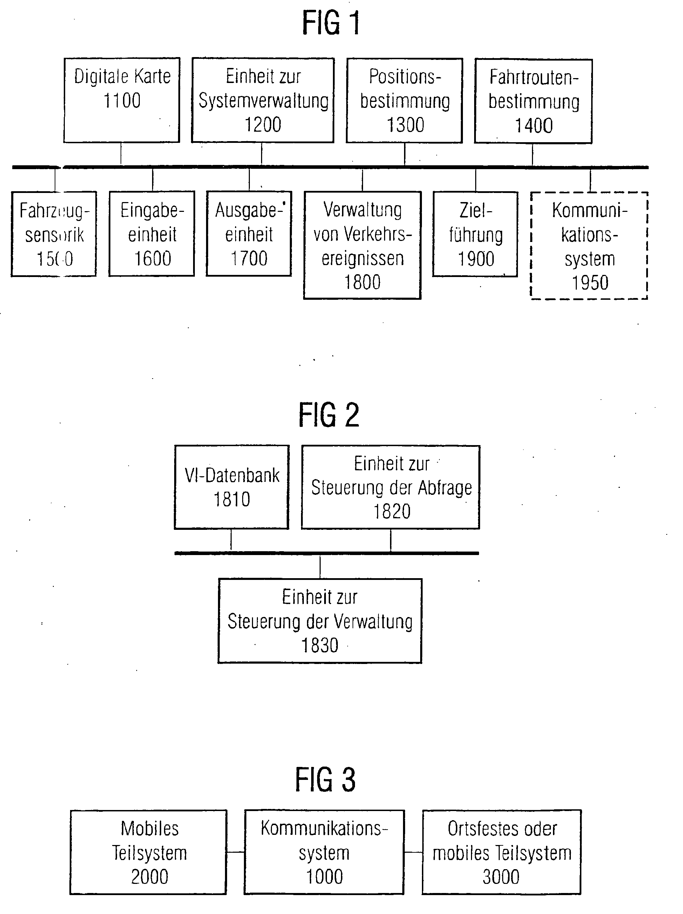

Fig. 1 zeigt ein Gesamtsystem zur Verwaltung von verkehrsrelevanten Ereignissen gemäß einer Ausführungsform der Erfindung.

Das Gesamtsystem besteht aus einer digitalen Straßenkarte 1100, einer Einheit zur Systemverwaltung 1200, einer Einheit zur Positionsbestimmung 1300, einer Fahrtroutenbestimmungseinheit 1400, zumindest aus Schnittstellen zur Fahrzeugsensorik, insbesondere zur Abnahme eines Meßwerts für die Geschwindigkeit des Fahrzeugs, 1500, einer Eingabeeinheit 1600, einer Ausgabeeinheit 1700, einer Zielführungseinheit 1900, einem Kommunikationssystem 1950, das für eine Übertragung von Informationen an eine Verkehrszentrale eingerichtet ist, sowie einer Komponente 1800, die der Verwaltung von Verkehrsereignissen, insbesondere von verkehrsrelevanten Ereignissen wie etwa Verkehrsstörungen, dient.

Fig. 2 zeigt die Einrichtung zur Verwaltung von Verkehrsereignissen 1800 aus Fig. 1 mit genaueren Einzelheiten.

Die Vorrichtung 1800 enthält eine Einheit 1810 für die Speicherung von Verkehrsinformationen die im weiteren als VI-Datenbank bezeichnet wird. Weiter enthält die Vorrichtung 1800 eine Einheit 1820 zur Steuerung der Abfrage der aktuellen Verkehrssituation sowie eine Einheit 1830 zur Steuerung der Verwaltung der Verkehrsinformationen.

Fig. 3 zeigt eine mögliche Variation des Gesamtsystems.

Bei dem in Fig. 3 gezeigten Gesamtsystem können die Fahranweisungen, Verkehrsinformationen und gegebenenfalls sicherheitsrelevanten Hinweise des Fahrers sowie der zugehörigen Positionsangaben über ein Kommunikationssystem 1000 von einer ortsfesten Einheit 3000 an ein mobiles Navigationsteilsystem 2000 übertragen werden. Die Vorrichtung 1800 kann dabei alternativ im System 2000 oder 3000 angeordnet sein.

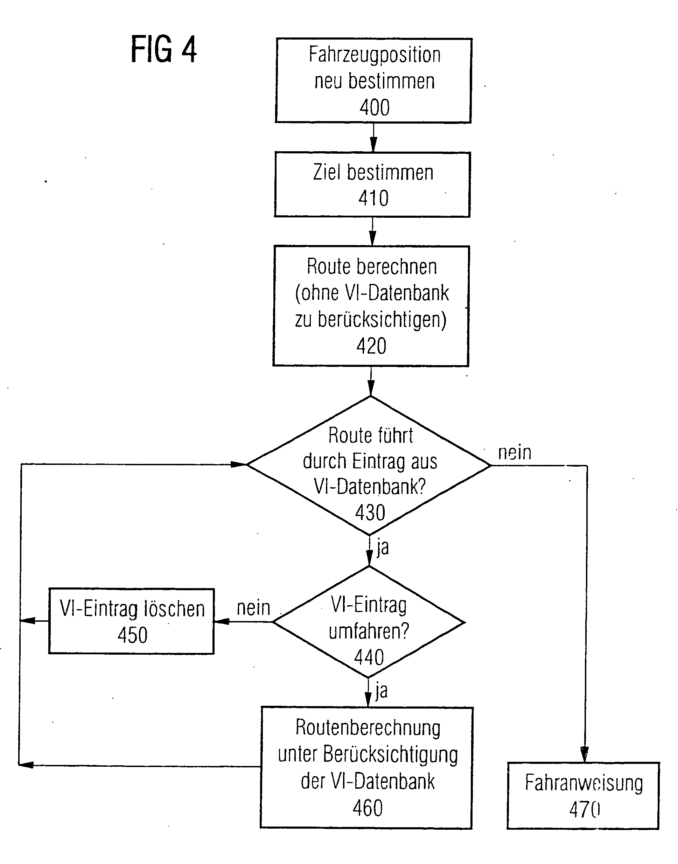

Fig. 4 zeigt den Ablauf beim Ermitteln der optimalen Route vor Fahrtantritt.

Im folgenden wird ein bevorzugtes Ausführungsbeispiel eines erfindungsgemäßen Verfahrens mit den für die Erfindung wesentlichen Schritten genauer beschrieben.

Das Verfahren kann mit einem Gesamtsystem durchgeführt werden, wie es in Fig. 1 schematisch dargestellt ist. Um die Funktion der einzelnen Komponenten des Gesamtsystems zu betrachten, sei ergänzend auf Fig. 1 Bezug genommen.

Das Gesamtsystem soll in einem Kraftfahrzeug in Form eines Navigationssystems untergebracht sein.

Zunächst wird in einem Schritt 400 die aktuelle Fahrzeugposition vom Navigationsgerät bestimmt oder von dessen Benutzer eingegeben. Dann wird in einem Schritt 410 das Ziel der Fahrtroute abgefragt und dem System bekanntgemacht.

Des weiteren wird in vorteilhafter Weise in einem Schritt 420 die Routenplanung ohne Berücksichtigung der VI-Datenbank von der Einheit zur Bestimmung der Fahrtrouten 1400 durchgeführt.

Daraufhin vergleicht der Algorithmus in einem Schritt 430 die einzelnen Routenabschnitte mit den Straßenabschnitten der VI-Datenbank, um herauszufinden, ob individuelle Verkehrsinformationen bei der Routenplanung berücksichtigt werden sollen oder nicht.

Im Ja-Zweig des Schrittes 430 sind übereinstimmende Einträge vorhanden. Dann wird der Fahrer beziehungsweise Benutzer in einem Schritt 440 gefragt, ob der betreffende Streckenabschnitt, der mit persönlichen, individuellen Verkehrsinformationen belegt ist, umfahren werden soll oder ob er durchfahren werden soll. Bestätigt der Fahrer die Option des Umfahrens des betreffenden Streckenabschnitts, - Ja-Zweig von Schritt 440 - so wird die Routenplanung in Schritt 460 unter Ausschluß dieses Abschnittes erneut gestartet.

Möchte der Fahrer andererseits den betreffenden Streckenabschnitt durchfahren, - Nein-Zweig von Schritt 440 - so wird der Eintrag aus der VI-Datenbank, der die zugehörigen Verkehrsinformationen, etwa bezüglich Verkehrsstörungen auf dem betreffenden Streckenabschnitt enthält, aus der Datenbank gelöscht, Schritt 450. Auch danach wird die Route neu berechnet und erneut geprüft, wie vorher bereits in Schritt 430 geschehen, ob die Route durch einen weiteren Streckenabschnitt führt, der in der VI-Datenbank als mit einer Verkehrsstörung behaftet gespeichert ist.

Es findet also sowohl im Ja-Zweig als auch im Nein-Zweig von Schritt 440 eine Rückverzweigung zur Entscheidung 430 statt. Anschließend wird die oben geschilderte Prozedur nach dem gleichen Muster so lange wiederholt, bis sich keine Einträge der VI-Datenbank mehr mit Abschnitten der Route überschneiden, so daß also für jeden Streckenabschnitt, der in der VI-Datenbank enthalten ist, geklärt wurde, ob er umfahren werden soll oder nicht.

Dann wird in einem Schritt 470 eine erste Fahranweisung von der Ausgabeeinheit 1700 ausgegeben.

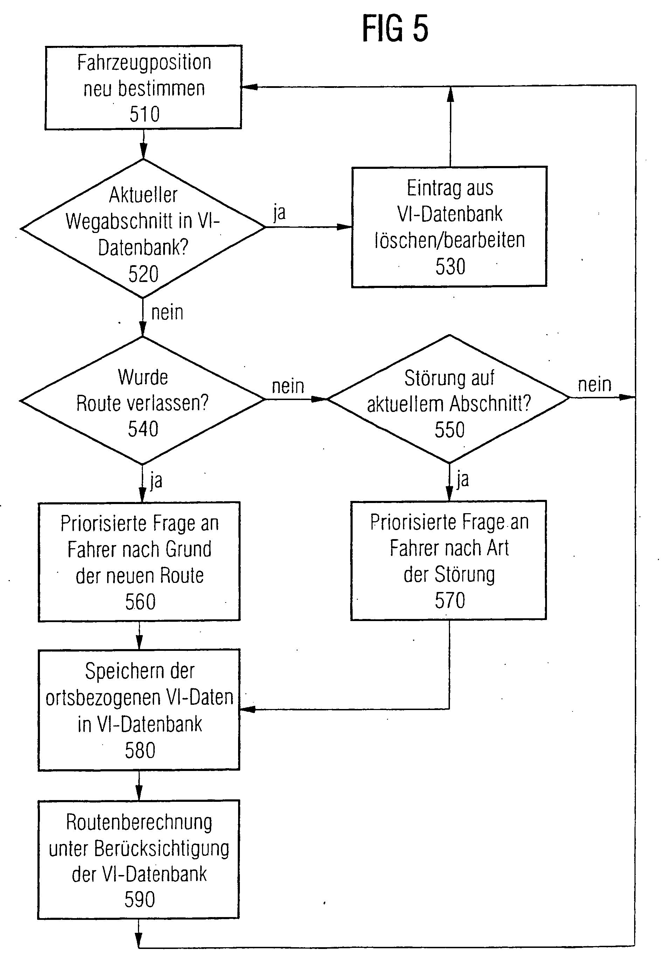

Fig. 5 zeigt den Ablauf beim Verwalten der VI-Datenbank während der Fahrt.

Während der Fahrt findet in der Positionsbestimmungseinheit 1300 ständig eine Ortsbestimmung durch das Ortungsmodul des Navigationsgerätes statt. Der in Fig. 5 dargestellte Ablauf des Verfahrens wird also während der Fahrt ständig wiederholt.

Im einzelnen wird daher zunächst immer der als Schritt 510 dargestellte Schritt der Bestimmung der aktuellen Fahrzeugposition durchgeführt. Anschließend wird in einem Schritt 520 auf Grund des bekannten Ortes und der in der Einheit 1400 bekannten Wegabschnitte der Fahrtroute bestimmt, ob einer der aktuellen Wegabschnitte mit einem Wegabschnitt, der in einem Eintrag der VI-Datenbank zu finden ist, übereinstimmt. Wird aus diesem Vergleich 520 festgestellt, daß ein Eintrag für den aktuellen Wegabschnitt in der VI-Datenbank 1810 vorhanden ist, siehe Ja-Zweig von 520, so wird dieser Eintrag während der Fahrt bearbeitet.

Diese Bearbeitung findet in einem Schritt 530 statt. Die Bearbeitung kann beispielsweise in einem Löschen des Eintrags bestehen, wenn die Verkehrsinformationen des Eintrags eine Baustelle beschreiben, der Fahrer aber diesen Abschnitt mit sehr viel höherer Geschwindigkeit passiert, als es üblicherweise beim Durchfahren einer Baustelle anzunehmen ist oder weil die aktuelle Geschwindigkeit des Fahrzeugs in dem vermeintlichen Streckenabschnitt, die von der Fahrzeugsensorik 1500 kommend automatisch erfaßbar und auswertbar ist, größer ist als ein Geschwindigkeitswert, der als Durchschnittsgeschwindigkeit für den Streckenabschnitt in der VI-Datenbank-eingetragen ist. Hierin zeigt sich ein besonders bevorzugtes Merkmal der vorliegenden Erfindung, nämlich, dass die Verkehrsinformationen für einen bestimmten Streckenabschnitt automatisch aktualisiert werden können. Die Aktualisierung des betreffenden Eintrags kann jedoch auch darin bestehen, daß ein bereits in dem Eintrag vorhandener Geschwindigkeitswert mit einem aktuellen Geschwindigkeitswert überschrieben wird. Dieser aktuelle Geschwindigkeitswert kann durch das Gesamtsystem berechnet werden. Danach geht die Kontrolle wieder zurück zu Schritt 510, wo die Fahrzeugposition neu bestimmt wird.

Im Nein-Zweig von Schritt 520, daß heißt, der aktuelle Wegabschnitt ist nicht in der VI-Datenbank enthalten, wird in einem Schritt 540 geprüft, ob die vom System vorgegebene Route verlassen wurde oder nicht. Im Nein-Zweig des Schritts 540 hat sich der Fahrer an die Anweisungen der Zielführungseinheit 1900 gehalten und die vorgeschlagene Route nicht verlassen. In diesem Fall kann der Fahrer eigene, aktuelle Verkehrsbeobachtungen, die dem Navigazionsgerät nicht bekannt sind oder nicht gemeldet wurden, in die VI-Datenbank eingeben. Solche Verkehrsbeobachtungen betreffen vorzugsweise Ereignisse, die eine Verkehrsrelevanz aufweisen, sind also gemäß einem bevorzugten Aspekt der vorliegenden Erfindung insbesondere Verkehrsstörungen. Gemäß einem weiteren Aspekt der vorliegenden Erfindung können jedoch auch andere Ereignisse in die VI-Datenbank eingegeben werden, die nur fahrerindividuelle Bedeutung haben.

Die Eingabe einer Störung wird vom Fahrer selbst festgestellt und das System in entsprechender Weise in einem Schritt 550 zur Aufnahme eines Eintrags in VI-Datenbank aktiviert, alternativ dazu kann dies jedoch auch automatisch erfolgen, beispielsweise, wenn die aktuelle Fahrgeschwindigkeit unter einen vom System für den betreffenden Streckenabschnitt gespeicherten Geschwindigkeitswert fällt. Dieses Merkmal wird beispielsweise dann oft erfüllt sein, wenn eine Autobahnbaustelle frisch und ungemeldet vorhanden ist und in Folge dessen eine Staubildung mit entsprechender Herabsetzung der Geschwindigkeit vorliegt.

Bei dieser Ausführungsform wird die Eingabe eines Eintrags in die VI-Datenbank in einem Schritt 570 durch priorisierte Abfragen des Fahrer vom System aus durchgeführt, die in erster Linie nach dem Grund der Störung fragen. Die Priorisierung geschieht vorzugsweise in der Reihenfolge ihrer Wahrscheinlichkeit. Eine solche Priorisierung kann für unterschiedliche Streckenabschnitte unterschiedliches Aussehen haben. Vorzugsweise werden dem Fahrer über die Ausgabeeinheit 1700 Vorschläge betreffend verschiedener Störungsarten nacheinander mit einer Aufforderung zur Auswahl präsentiert. Der Fahrer wählt dann mit der Eingabeeinheit 1600 die tatsächliche Störungsart aus. Dann wird in einem Schritt 580 ein neuer Eintrag in die VI-Datenbank 1810 generiert, der den entsprechenden, vom Fahrer erfragten Inhalt besitzt. Dieser Eintrag wird gespeichert. Anschließend findet in einem Schritt 590 auf Grund der neuen Informationen aus der VI-Datenbank eine Neuberechnung der Fahrtroute in der Einheit 1400 statt. Dies kann beispielsweise bei einem Stau auf einer Autobahn bedeuten, daß das Verkehrsnavigationssystem ein Abfahren an der nächsten Ausfahrt vorschlägt. Danach wird zurückverzweigt in Schritt 510 zur erneuten Fahrzeugpositionsbestimmung.

Verläßt der Fahrer bei Schritt 540 die vom System vorgeschlagene Route, - Ja-Zweig von Schritt 540 - so wird er automatisch nach dem Grund gefragt. Auch diese Abfrage geschieht in bevorzugter Weise priorisiert, derart, daß der Fahrer nur bestimmte Vorschläge des Systems mit Ja oder Nein beantworten beziehungsweise durch Tastendruck ablehnen oder annehmen kann. Beispielsweise kann damit bei außerplanmäßigem Abfahren von einer höher- in eine niedrigklassigere Straße, also etwa von einer Autobahn auf eine Bundesstraße, ein in der externen Verkehrsinformationszentrale nicht bekannter Stau auf der höherklassigen Straße vermutet werden, wenn die Geschwindigkeit des Fahrzeugs auf dieser Straße sehr viel kleiner war als die zulässige Höchstgeschwindigkeit.

Auch die durch Schritt 560 vom Fahrer erfragten Informationen oder optional die vom System vermuteten Ereignisse werden als entsprechende Verkehrsinformationen für den betreffenden Streckenabschnitt der Hauptroute eingetragen und in der VI-Datenbank 1810 in einem-Schritt 580, analog wie oben beschrieben, gespeichert. Danach wird ebenso wie oben beschrieben, Schritt 590 durchgeführt und rückverzweigt zur Neubestimmung der Fahrzeugposition.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Der Fahrer kann beispielsweise nicht nur einen, sondern mehrere Gründe für eine Verkehrsstörung in der oben genannten priorisierten Abfrage auswählen, sofern dies semantisch sinnvoll ist. Aus diesen Gründen werden in bevorzugter Weise Annahmen für die Parametrierung der weiteren Routenplanung gewonnen. Die gewonnenen Annahmen werden dann bis zum nächsten Ansteuern des betroffenen Straßenabschnitts im Sinne einer Störungsprädiktion gespeichert. Wenn solche Annahmen bei erneutem Durchfahren des betroffenen Streckenabschnitts nicht bestätigt werden, werden diese wieder überschrieben.

Darüber hinaus können die aktuell vom Fahrer erfragten Verkehrsstörungen einer externen Verkehrsinformationszentrale zum Zwecke der Aktualisierung und Vervollständigung ihrer Verkehrslage-Informationen zur Verfügung gestellt werden.

Die Verwaltung der verschiedenen Gründe für eine Verkehrsstörung, die dem Fahrer im Laufe-der priorisierten Abfrage präsentiert werden, werden bevorzugter Weise von einem Algorithmus in der VI-Datenbank 1810 verwaltet. Je nach Anzahl der vom System vorgebbaren Gründe und Diversität des Streckennetzes bezüglich höherer- oder niedrigrangigerer Strecken kann dieser Algorithmus in breitem Umfang variieren und auch empirische Daten, wie etwa Tageszeit, Wochentag oder saisonbedingte Urlaubszeiten mit erhöhtem Verkehrsaufkommen auf bestimmten Streckenabschnitten berücksichtigen.

Des weiteren kann gemäß der in Figur 3 dargestellten Variation des Gesamtsystems die VI-Datenbank 1810 auch über das Kommunikationssystem 1000 mit aktuellen Informationen von einer externen Datenzentrale versorgt werden.

## Patentansprüche

1. Verfahren zur Verwaltung von verkehrsrelevanten Ereignissen in einem fahrzeugbasierten Navigationssystem mit den Schritten:
Erfassen (540, 550, 560, 570) von mit einem oder mehreren Streckenabschnitten einer Route verbundenen Ereignissen aus dem Ereignishorizont des Fahrers des Fahrzeugs, Speichern (580) von die Ereignisse repräsentierenden Informationen, Analysieren der Ereignisse und Verarbeiten (590) der Analyse-Ergebnisse zum Zwecke einer aktualisierten Routenplanung **dadurch gekennzeichnet, dass** ein Dialog zwischen dem Fahrer und dem Navigationssystem durchgeführt wird, wenn der Fahrer die vom Navigationssystem vorgeschlagene Route verlässt, und dass vom dem Fahrer empirisch gewonnene Erkenntnisse bezüglich einem oder mehrerer Streckenabschnitte dem Navigationssystem bekannt gemacht und für eine fahrerspezifische Routenplanung verwendet werden.

2. Verfahren nach Anspruch 1, **dadurch gekennzeichnet, dass** ein Grund für ein Verlassen der vorgeschlagenen Route eingegeben wird.

3. Verfahren nach einem der vorhergehenden Ansprüche, wobei Ereignisse aus dem Ereignishorizont des Fahrzeugs aus Messungen während der Fahrt automatisch gewonnen werden und mit dem zugehörigen Streckenabschnitt als dessen Attribut gespeichert werden.

4. Verfahren nach Anspruch 3, wobei die Messungen oder deren Auswertungen wenigstens eine der folgenden Größen enthalten:
Durchschnittsgeschwindigkeit des Fahrzeugs in dem betreffenden Streckenabschnitt, Gleichmäßigkeit der Fahrgeschwindigkeit, Umgebungstemperatur, mechanische Erschütterungen des Fahrzeugs.

5. Verfahren nach einem der vorhergehenden Ansprüche, wobei als Attribute die Tageszeit und/oder der Wochentag zusätzlich mit einem Streckenabschnitt gespeichert werden.

6. Verfahren nach einem der vorhergehenden Ansprüche mit dem weiteren Schritt, einen oder mehrere Streckenabschnitte einer Route mit vom Fahrer des Fahrzeugs eingebbaren Attributen zu belegen.

7. Verfahren nach einem der vorhergehenden Ansprüche, wobei der Schritt des Analysierens von Ereignissen deren Bewertung bezüglich ihrer Relevanz als Verkehrsstörung umfasst.

8. Verfahren nach einem der vorhergehenden Ansprüche mit dem weiteren Schritt, die aus einer Analyse der Ereignisse gewonnenen Informationen an eine externe Verkehrsinformationszentrale weiterzugeben.

9. Vorrichtung zur Verwaltung von verkehrsrelevanten Ereignissen in einem fahrzeug-basierten Navigationssystem mit Einrichtungen (1810, 1820, 1840) zum Durchführen des Verfahrens nach einem der vorstehenden Ansprüche.

## Claims

1. Method for managing traffic-related events in a vehicle-based navigation system, having the following steps:
events linked to one or more road sections on a route are detected (540, 550, 560, 570) from the event horizon of the driver of the vehicle, information representing the events is stored (580), the events are analyzed and the analysis results are processed (590) for the purpose of updated route planning, **characterized in that** a dialogue is conducted between the driver and the navigation system if the driver leaves the route proposed by the navigation system, and **in that** insights obtained empirically by the driver with regard to one or more road sections are reported to the navigation system and are used for driverspecific route planning.

2. Method according to Claim 1, **characterized in that** a reason for leaving the proposed route is input.

3. Method according to one of the preceding claims, where events from the event horizon of the vehicle are obtained automatically from measurements during the journey and are stored with the associated road section as an attribute thereof.

4. Method according to Claim 3, where the measurements or their evaluations contain at least one of the following variables: average speed of the vehicle on the road section in question, evenness of the speed of travel, ambient temperature, mechanical vibrations in the vehicle.

5. Method according to one of the preceding claims, where the time of day and/or the day of the week are additionally stored with a road section as attributes.

6. Method according to one of the preceding claims, with the further step of providing one or more road sections on a route with attributes which can be input by the driver of the vehicle.

7. Method according to one of the preceding claims, where the step of analyzing events comprises assessing them for their relevance as a traffic disruption.

8. Method according to one of the preceding claims, with the further step of forwarding the information obtained from analysis of the events to an external traffic information centre.

9. Apparatus for managing traffic-related events in a vehicle-based navigation system with devices (1810, 1820, 1840) for carrying out the method according to one of the preceding claims.

## Revendications

1. Procédé de gestion d'événements concernant la circulation dans un système de navigation à bord d'un véhicule, comprenant les étapes de détection (540, 550, 560, 570) d'événements liés à une ou plusieurs sections d'un itinéraire à partir de l'horizon des événements du conducteur du véhicule, de mémorisation (580) des informations représentant les événements, d'analyse des événements et de traitement (590) des résultats de l'analyse en vue d'une planification actualisée de l'itinéraire,
**caractérisé en ce qu'**
on effectue un dialogue entre le conducteur et le système de navigation, lorsque le conducteur quitte l'itinéraire proposé par le système de navigation, et des renseignements obtenus empiriquement par le conducteur concernant une ou plusieurs sections sont communiquées au système de navigation et utilisées pour une planification de l'itinéraire spécifique au conducteur.

2. Procédé selon la revendication 1,
**caractérisé en ce qu'**
on introduit un motif de quitter l'itinéraire proposé.

3. Procédé selon l'une quelconque des revendications précédentes, selon lequel des événements de l'horizon des événements du véhicule sont obtenus automatiquement à partir de mesures pendant le déplacement et sont mémorisés avec la section d'itinéraire associée comme attribut de celle-ci.

4. Procédé selon la revendication 3, selon lequel les mesures ou leurs exploitations comprennent au moins une des grandeurs suivantes : vitesse moyenne du véhicule dans la section considérée, uniformité de la vitesse de circulation, température ambiante, vibrations mécaniques du véhicule.

5. Procédé selon l'une quelconque des revendications précédentes, selon lequel on mémorise comme attribut l'heure du jour et/ou le jour de la semaine en plus d'une section d'itinéraire.

6. Procédé selon l'une quelconque des revendications précédentes, comprenant l'étape supplémentaire consistant à munir une ou plusieurs sections d'un itinéraire d'attributs à introduire par le conducteur du véhicule.

7. Procédé selon l'une quelconque des revendications précédentes, selon lequel l'étape d'analyse d'événements comprend leur exploitation en ce qui concerne leur pertinence comme perturbation de la circulation.

8. Procédé selon l'une quelconque des revendications précédentes, comprenant l'étape supplémentaire de transmission des informations obtenues par une analyse des événements à une centrale externe d'informations routières.

9. Dispositif de gestion d'événements concernant la circulation dans un système de navigation à bord d'un véhicule, avec des dispositifs (1810, 1820, 1840) pour la mise en oeuvre du procédé selon l'une quelconque des revendications précédentes.
